# EUROPÄISCHE PATENTANMELDUNG

(11) **EP 1 669 183 A2**
(43) Veröffentlichungstag der Anmeldung: **14.06.2006**
(21) Anmeldenummer: 05026057.9
(22) Anmeldetag: 30.11.2005
(51) Int. Cl.: B29C 44/60, B29C 44/20

(54) **Verfahren und Anlage zur kontinuierlichen Herstellung von Schaumstoff**

(30) Priorität: 11.12.2004 DE 102004059724
(71) Anmelder: Bayer MaterialScience AG, 51368 Leverkusen (DE)
(72) Erfinder: Ehbing, Hubert, Dr., 51519 Odenthal (DE); Zien, Holger, Dr., 51065 Köln (DE); Rauhaus, Rainer, 42719 Solingen (DE); Frei, Hans, 8645 Jona (CH)

(57) **Zusammenfassung**

Die Erfindung betrifft eine Anlage und ein Verfahren zur Herstellung von Schaumstoff in einem kontinuierlichem Schaumprozess mit folgenden Schritten:
- Erfassung von Ist-Oberflächentemperaturen des Schaumstoffs oder der Deckschichten entlang einer Förderrichtung,
- Bestimmung einer Stellgröße für den Schaumprozess in Abhängigkeit von einer Abweichung der Ist-Oberflächentemperaturen von Soll-Oberflächentemperaturen.

## Beschreibung

Die Erfindung betrifft ein Verfahren und eine Anlage zur Herstellung von Schaumstoff in einem kontinuierlichen Schaumprozess, insbesondere die Herstellung von Polyurethan-Schaumstoff.

Die Produktqualität von Schaumstoffen hängt von einer Vielzahl von Umgebungsparametern und Anlagenparametern ab. Dies gilt insbesondere für die Herstellung von Polyurethan-Schaum.

Es sind verschiedene computergestützte Verfahren für die Qualitätssicherung bei der Herstellung von Polyurethan-Schaum bekannt geworden, wie zum Beispiel aus "Software to Manage a Continous Production of Flexible Polyurethane Foams by Slabstock Technology", Salvatore Consoli, Journal of CELLULAR PLASTICS, Volume 33, März 1997, Seite 102, "Foam Roadmap On-Line Answernostics", James D. Shoup, Polyurethane 1995, September 26-29, 1995, Seiten 489, 490 und "Mathematical Property Prediction Models for Flexible Polyurethane Foams", Reinhart Schiffauer, Adv. Urethane Sci. Techn. 14 (1998), Seiten 1 bis 44.

Aus "Experten mit System, Prozesssteuerung des PUR-RRIM-Verfahrens zur Herstellung von Karosserieaußenteilen", F. Schnabel, Sulzbach, K.-H. Dörner, Kunststoffe, 88. Jahrgang, 10/98 und "PUR-Teile kostengünstig fertigen, Stand der Polyurethan-RRIM-Technologie", Karl-Heinz Dörner, Hans Joachim Meiners, Hans-Joachim Ludwig, Kunststoffe, 91. Jahrgang, 4/2001 sind ferner Expertensysteme zur Verarbeitung von Prozessparametern bei der RIM-Verarbeitung bekannt. Diese Expertensysteme sollen Aussagen hinsichtlich der Produkteigenschaften, der Prozessüberwachung, der Qualitätssicherung und der vorbeugenden Instandhaltung treffen können.

Darüber hinaus beschreibt DE 28 19 709 B1 ein Verfahren zur kontinuierlichen Herstellung von mit Decksichten versehenen Schaumplatten, bei dem quer zur Förderrichtung die Dicke des Schaums mit Ultraschall erfasst wird. Die Fertigungsanlage wird dann über die Förderbandgeschwindigkeit und/oder die aufgebrachte Schaummenge gesteuert.

Für einen kontinuierlichen Blockschaumprozess wird in DE 102 37 005 A1 ein Verfahren beschrieben, bei dem entlang der Fördervorrichtung kontinuierlich Ist-Steighöhen erfasst werden. In Abhängigkeit von möglichen Abweichungen zwischen den Ist-Steighöhen und vorgegebenen Soll-Steighöhen wird eine Stellgröße zur Steuerung des Blockschaumprozesses ermittelt.

Verfahren zur Temperaturmessung, insbesondere der berührungslosen Temperaturmessung sind seit längerem Stand der Technik. Mit Pyrometern wird die vom Messobjekt ausgehende Infrarotstrahlung ausgewertet. Berührungslos kann so die Oberflächentemperatur von beispielsweise Endlos-Band-Anlagen, Kunststoff-Extrudiermaschinen, Förderbänder oder Kalander überwacht werden.

Ferner sind aus dem Stand der Technik verschiedene Anlagentypen zur Herstellung von Polyurethan-Blockschaum und anderen Schaumstoffen bekannt. Beispiele sind Planiblock-, UBT-, QFM-, Draka-Petzetakis-, Maxfoam-, Vertifoam Edge Control- und VPF-Verfahren. Bei diesen Anlagentypen wird Polyurethan-Weichschaum in einem kontinuierlichen Rechteck-Verfahren hergestellt. Hartschaum-Verbundplatten mit flexiblen oder starren Deckschichten stellt man auf kontinuierlich arbeitenden Doppeltransportband-Anlagen her.

Verschiedene Vorrichtungen für die kontinuierliche Herstellung von Polyurethan-Schaumstoffblöcken sind ferner aus DE 691 19 244 T2, DE 692 17 671 T2 und US 4,492,664 A bekannt. Aus DE 696 10 885 T2 ist ein weiteres Gerät zur Herstellung von Polyurethan-Schaumstoff bekannt. Verschiedene Verfahren zur Herstellung von Polyurethan-Schaumstoffen auf solchen Anlagen zeigen DE 38 19 940 A1, DE 196 49 829 A1, DE 43 15 874 A1 und DE 195 06 671 C2.

Der Erfindung liegt die Aufgabe zu Grunde, ein verbessertes Verfahren zur Herstellung von Schaumstoff in einem kontinuierlichen Blockschaum-Prozess und eine verbesserte Anlage zur Herstellung von Schaumstoff in einem solchen Prozess zu schaffen.

Die Erfindung erlaubt eine verbesserte Kontrolle und eine verbesserte Regelung der Herstellung von Schaumstoff in einem kontinuierlichem Schaumprozess durch Erfassung der Ist-Oberflächentemperaturen des Schaums an mehreren Stellen entlang des Expansionsbereiches des Schaumstoffs in der Anlage. Die Ist-Oberflächentemperaturen werden mit entsprechenden Soll-Oberflächentemperaturen verglichen. Aus einer eventuellen Abweichung der Ist- von den Soll-Oberflächentemperaturen wird eine Stellgröße für die Nachregelung des Prozesses ermittelt.

Da die Reaktionswärme des Schaums auch die Temperatur der Deckschichten erhöht, können alternativ und/oder ergänzend die Temperaturen des Bodenblechs bzw. des Deckblechs oder des Bodenpapiers auf der Schaum abgewandten Seite entlang der Förderrichtung berührend oder berührungslos erfasst werden. Zusätzlich kann berührungslos mit einem Infrarot-Pyrometer oder mit einem Kontaktthermometer die Temperatur des Mischkopfes erfasst werden.

Von besonderem Vorteil ist hierbei, dass zum einen unmittelbar nach Auftrag des Reaktionsgemisches bereits eine qualitative und quantitative Kontrolle des Schäumvorganges erfolgen kann. Zum anderen können während der laufenden Produktion des Schaumstoffs Anlagenparameter und/oder die Zusammensetzung des Ausgangsmaterials für den Schaumstoff nachgeregelt werden, um so zu einer möglichst gleich bleibenden gewünschten Schaumstoffqualität zu kommen.

Dadurch werden Schwankungen in Produkteigenschaften, wie zum Beispiel der Dichte und der Stauchhärte des Schaumstoffs, aufgrund von schwankenden Prozessparametern und Umweltbedingungen, wie zum Beispiel dem Luftdruck, reduziert. Dies hat den weiteren Vorteil, dass die für das Einfahren der Anlage benötigte Zeit und der Ausschuss reduziert werden.

Nach einer bevorzugten Ausführungsform der Erfindung erfolgt die Herstellung der Schaumstoffs in einer Anlage vom Typ Hennecke, Planiblock, Draka-Petzetakis, Maxfoam, Vertifoam, Edge Control, VPF oder einer Doppeltransportband-Anlage. Solche Anlagen haben üblicherweise eine Fördervorrichtung, auf der der expandierende Schaumstoff in eine Förderrichtung bewegt wird. Zum Teil ist in dem Expansionsbereich des Schaumstoffs ein so genanntes Fallbrett vorhanden.

Erfindungsgemäß werden in dem Expansionsbereich des Schaumstoffs entlang der Förderrichtung mehrere Temperatursensoren angeordnet, um die Ist-Oberflächentemperatur an unterschiedlichen Stellen des Expansionsbereichs zu messen. Dabei kommen bevorzugt berührungslose Infrarot-Pyrometer zum Einsatz, die eine Messung der Ist-Oberflächentemperatur des Schaums erlauben. Alternativ oder ergänzend können auch die Temperaturen des Bodenblechs bzw. des Deckblechs oder des Bodenpapiers berührend oder berührungslos erfasst werden.

Nach einer bevorzugten Ausführungsform der Erfindung wird durch die gemessenen Ist-Oberflächentemperatur des Schaums eine Ausgleichskurve gelegt, die mit einer Soll-Kurve verglichen wird. Beispielsweise wird die Differenz der Steigungen der Kurven oder die Differenz der Integrale der Kurven in dem Expansionsbereich als Basis für die Bestimmung einer Stellgröße verwendet.

Nach einer bevorzugten Ausführungsform der Erfindung dient die Fördergeschwindigkeit des expandierenden Schaumstoffs als Stellgröße. Liegen beispielsweise die Ist-Oberflächentemperaturen unter den Soll-Oberflächentemperaturen, so wird die Fördergeschwindigkeit solange verringert, bis die Ist-Temperaturen hinreichend mit den Soll-Temperaturen übereinstimmen.

Nach einer weiteren bevorzugten Ausführungsform der Erfindung dient die pro Zeiteinheit dem Blockschaumprozess zugeführte Materialmenge als Stellgröße. Liegen beispielsweise die Ist-Oberflächentemperaturen unter den Soll-Oberflächentemperaturen, so wird die pro Zeiteinheit zugeführte Materialmenge solange erhöht, bis die Ist- und die Soll-Oberflächentemperaturen hinreichend übereinstimmen.

Nach einer weiteren bevorzugten Ausführungsform der Erfindung dient die chemische Zusammensetzung des dem Blockschaumprozess zugeführten Materials als Stellgröße. Liegen beispielsweise die Ist-Oberflächentemperaturen, unter den Soll-Oberflächentemperaturen des Schaums, so wird die chemische Zusammensetzung verändert, bis die Ist-Oberflächentemperaturen hinreichend mit den Soll-Oberflächentemperaturen übereinstimmen. Insbesondere kann die Katalysator- und/oder die Wassermenge variiert werden.

Nach einer weiteren bevorzugten Ausführungsform der Erfindung dient die Temperatur der Reaktionskomponenten als Stellgröße. Liegen beispielsweise die Ist-Oberflächentemperaturen unter den Soll-Oberflächentemperaturen des Schaums, so wird die Temperatur der Reaktionskomponenten erhöht, bis die Ist- und die Soll-Oberflächentemperatur des Schaums hinreichend übereinstimmen.

Nach einer weiteren bevorzugten Ausführungsform der Erfindung dient die Temperatur des Fallbrettes oder der Auftragsplatte als Stellgröße. Liegen beispielsweise die Ist-Oberflächentemperaturen unter den Soll-Oberflächentemperaturen des Schaums, so wird die Temperatur des Fallbrettes oder der Auftragsplatte erhöht, bis die Ist- und die Soll-Oberflächentemperatur des Schaums hinreichend übereinstimmen.

Nach einer weiteren bevorzugten Ausführungsform der Erfindung dient die Temperatur der vorzugsweise metallischen Deckschichten als Stellgröße. Liegen beispielsweise die Ist-Oberflächentemperaturen unter den Soll-Oberflächentemperaturen des Schaums, so wird die Temperatur der Deckschichten erhöht, bis die Ist- und die Soll-Oberflächentemperatur des Schaums hinreichend übereinstimmen.

Nach einer weiteren bevorzugten Ausführungsform der Erfindung werden aufgrund einer Abweichung der Ist- von den Soll-Oberflächentemperatur des Schaums oder des Ist-Temperaturprofils der Deckschichten vom Soll-Temperaturprofil der Deckschichten verschiedene Stellgrößen bestimmt, wie zum Beispiel eine Änderung der Fördergeschwindigkeit, der Temperatur der Auftragsplatte oder der Deckschichten, der pro Zeiteinheit zugeführten Materialmenge und/oder der chemischen Zusammensetzung des zugeführten Materials.

Nach einer weiteren bevorzugten Ausführungsform der Erfindung wird aufgrund der Ist-Oberflächentemperatur des Schaums zumindest eine Produkteigenschaft des resultierenden Schaumstoffs prognostiziert. Für diese Prognose kann ein rigoroses Regressionsmodell verwendet werden. Alternativ oder zusätzlich kann ein neuronales Netz oder ein hybrides neuronales Netz für die Prognose verwendet werden.

Nach einer weiteren bevorzugten Ausführungsform der Erfindung wird aufgrund der Ist-Temperatur des Schaums das Aufschäumverhalten des Schaumstoffs prognostiziert. Insbesondere für die Herstellung von Hartschaumverbundplatten ist das Fließverhalten und das Überwälzen des Schaums unmittelbar unter der oberen Deckschicht eine wichtige Prozessgröße. Für diese Prognose kann ein rigoroses Regressionsmodell verwendet werden. Alternativ oder zusätzlich kann ein neuronales Netz oder ein hybrides neuronales Netz für die Prognose verwendet werden.

Nach einer bevorzugten Ausführungsform der Erfindung werden die Ist-Oberflächentemperaturen des Schaums, die chemische Zusammensetzung des zugeführten Materials sowie Anlagen- und/oder Umweltparameter dem neuronalen Netz als Eingangsgrößen zugeführt. Basierend hierauf prognostiziert das neuronale Netz zumindest eine Produkteigenschaft, wie zum Beispiel die Dichte, die Stauchhärte oder die Festigkeit.

Zum Training eines solchen neuronalen Netzes kann dabei eine Versuchsreihe gefahren werden, um eine zu prognostizierende Produkteigenschaft bei Variation der Eingangsgrößen zu messen. Aufgrund der so ermittelten Daten wird das neuronale Netz dann trainiert, das heißt es werden die tatsächlichen Parameter, Oberflächentemperaturen des Schaums, Steighöhen, Zusammensetzung, Anlagen und/oder Umweltparameter in das neuronale Netz eingegeben. Die von dem neuronalen Netz prognostizierte Produkteigenschaft wird mit der tatsächlich gemessenen Produkteigenschaft verglichen. Aufgrund der Differenz zwischen der prognostizierten Produkteigenschaft und der tatsächlichen Produkteigenschaft erfolgt eine Anpassung der Gewichtung der Neuronen, das heißt ein Training des neuronalen Netzes.

Alternativ oder zusätzlich kann dieses Training des neuronalen Netzes auch während der laufenden Produktion erfolgen, das heißt es wird in diesem Fall keine Versuchsreihe gefahren, sondern es werden die Daten der Produktion über einen gewissen Zeitraum von z.B. einem Jahr gesammelt und für das Training des neuronalen Netzes verwendet.

Nach einer weiteren bevorzugten Ausführungsform der Erfindung dienen die prognostizierten Produkteigenschaften zur Klassifizierung der Qualität des hergestellten Schaumstoffs. Beispielsweise werden die prognostizierten Qualitäten in einer Datenbank abgelegt.

Nach einer weiteren bevorzugten Ausführungsform der Erfindung werden aufgrund der Prognose zumindest einer Produkteigenschaft Bereiche geringer Qualität des hergestellten Schaumstoffs identifiziert. Solche Bereiche werden aus dem Schaumstoffblock ausgeschnitten. Im Vergleich zum Stand der Technik hat dies den Vorteil, dass weniger Ausschussmaterial produziert wird.

Beispielsweise werden in einer kontinuierlichen Schaumfertigung Blöcke von zum Beispiel 6 m Länge aus dem Schaumstoffstrang geschnitten. Im Stand der Technik werden die einzelnen Blöcke dann im nachhinein einer Qualitätsprüfung unterzogen. Dagegen erlaubt es die Erfindung, Bereiche des Schaumstoffstrangs, die als qualitativ minderwertig prognostiziert worden sind, aus dem Schaumstoffstrang auszuschneiden, so dass man Blöcke von zum Beispiel 6 m Länge einer einheitlichen prognostizierten Qualität erhält. Dabei ist auch eine Klassifizierung nach unterschiedlichen Qualitätsstufen möglich.

Im Weiteren werden bevorzugte Ausführungsformen der Erfindung mit Bezugnahme auf die Zeichnungen näher erläutert. Es zeigen:
- Figur 1: eine Prinzipdarstellung einer bevorzugten Ausführungsform der Erfindung bei einem Blockschaumprozess in einem kontinuierlichem Blockschaum-Verfahren,
- Figur 2: eine Prinzipdarstellung einer bevorzugten Ausführungsform der Erfindung bei einem Prozess zur Herstellung von Hartschaum-Verbundplatten mit einer Doppeltransportband-Anlage.

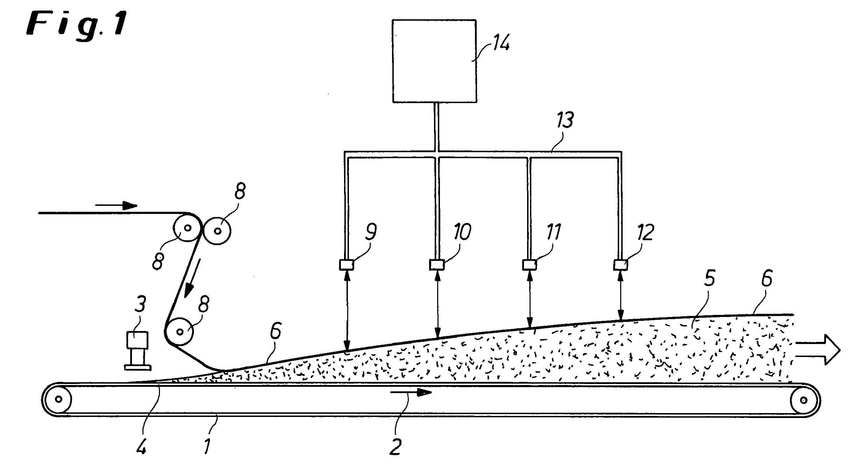

Die Figur 1 zeigt eine Anlage zur Herstellung von Schaumstoff, insbesondere von Polyurethan-Schaumstoff, in einem kontinuierlichem Blockschaumprozess.

Die Anlage weist ein Transportband 1 auf, welches in der Förderrichtung 2 bewegt wird. Am Anfang des Transportbands 1 befindet sich oberhalb des Transportbands 1 ein Mischkopf 3. Der Mischkopf 3 dient zur Aufbringung eines reaktiven chemischen Systems auf die Auftragsplatte 4 des Transportbands 1. Bei dem reaktiven chemischen System handelt es sich um ein schäumendes Gemisch, beispielsweise zur Herstellung von Polyurethan-Schaumstoff.

Das reaktive chemische Gemisch expandiert auf dem Transportband 1, so dass ein Expansionsbereich mit expandierendem Schaum 5 entsteht. Auf die Schaumoberfläche wird Abdeckpapier 6 aufgebracht, welches über Rollen 8 zugeführt wird.

Oberhalb des Expansionsbereichs sind Sensoren 9, 10, 11 und 12 angeordnet. Die Sensoren dienen dazu, die Oberflächentemperatur des Schaumstoffs zu messen. Die Sensoren 9, 10, 11 und 12 sind jeweils mit einem Bussystem 13 verbunden. Das Bussystem 13 ist mit einem Regler 14 verbunden. Über das Bussystem 13 erhält also der Regler 14 die Messsignale der Sensoren 9, 10, 11 und 12. Aufgrund dieser Messsignale ermittelt der Regler 14 eine Stellgröße zur Nachregelung des Schaumprozesses. Beispielsweise dient als Stellgröße die Geschwindigkeit des Transportbands 1 und/oder die pro Zeiteinheit über den Mischkopf 3 zugeführte Menge des reaktiven chemischen Systems und/oder die chemische Zusammensetzung des Systems und/oder die Temperatur der Auftragsplatte 4.

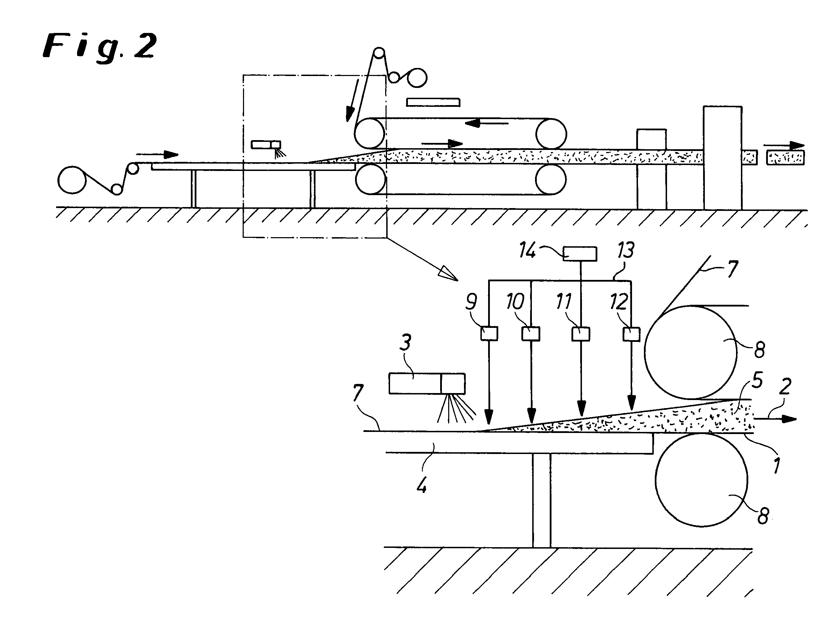

Die Figur 2 zeigt eine Anlage zur kontinuierlichen Herstellung von Polyurethan-Schaumstoff, insbesondere von Hartschaumstoffplatten mit einer Doppeltransportbandanlage.

Die Anlage weist ein Transportband 1 auf, welches in der Förderrichtung 2 bewegt wird. Am Anfang des Transportbands 1 befindet sich oberhalb des Transportbands 1 ein Mischkopf 3. Der Mischkopf 3 dient zur Aufbringung eines reaktiven chemischen Systems auf die Auftragsplatte 4 des Transportbands 1. Bei dem reaktiven chemischen System handelt es sich um ein schäumendes Gemisch, beispielsweise zur Herstellung von Polyurethan-Hartschaumstoff.

Das reaktive chemische Gemisch expandiert auf dem Transportband 1, so dass ein Expansionsbereich mit expandierendem Schaum 5 entsteht. Der Schaum wird dabei auf eine untere beispielsweise metallische Deckschicht 7 aufgebracht. Auf die Oberseite wird ebenfalls eine beispielsweise metallische Deckschicht 7 aufgebracht. Die Deckschichten 7 können aus flexiblen und/oder starren Materialien bestehen. Als Deckschichten für Dämmplatten werden Natronkraftpapier, bituminiertes Papier, Bitumenpappe, Krepppapier, PE-beschichtete Glasvliese und Aluminiumfolien verwendet. Bauelemente mit beidseitig starren Deckschichten werden mit lackiertem bzw. beschichtetem Stahl- oder Aluminiumblech oder GFK-Deckschichten versehen. Kombinationsplatten (Composites) erhält man, wenn als untere Deckschicht starre Platten (z.B. Span-, Gipskarton-, Faserzement-, Glasfaser-, Steinwoll- oder Perliteplatten) und oben eine rollbare Deckschicht eingesetzt wird. Die Deckschichten werden über Rollen 8 zugeführt. Das aufschäumende Gemisch erreicht im Bandkanal die obere Deckschicht 7. Durch den definierten Abstand des Oberbandes zum Unterband ist eine exakte Plattendicke gegeben.

Oberhalb des Expansionsbereichs sind Sensoren 9, 10, 11 und 12 angeordnet. Diese Sensoren dienen dazu, die Oberflächentemperatur des Schaums im Expansionsbereich zu messen. Nur im vorderen Expansionsbereich und bevor der Schaum die obere Deckschicht 7 erreicht, ist die Schaumoberfläche messtechnisch zugänglich und die Oberflächentemperaturen können erfasst werden.

Die Sensoren 9, 10, 11 und 12 sind jeweils mit einem Bussystem 13 verbunden. Das Bussystem 13 ist mit einem Regler 14 verbunden. Über das Bussystem 13 erhält der Regler 14 die Messsignale der Sensoren 9, 10, 11 und 12. Aufgrund dieser Messsignale ermittelt der Regler 14 eine Stellgröße zur Nachregelung des Schaumprozesses. Beispielsweise dient als Stellgröße die Geschwindigkeit des Transportbands 1 und/oder die Pro-Zeiteinheit über den Mischkopf 3 zugeführte Menge des reaktiven chemischen Systems und/oder die chemische Zusammensetzung des Systems und/oder die Temperatur der Auftragsplatte 4 und/oder die Temperaturen der Rohstoffkomponenten und/oder die Temperatur der Deckschichten 7.

Zur Durchführung der Regelung wird der Unterschied der Ist- und der Soll-Temperaturen ausgewertet. Dies kann beispielsweise so erfolgen, dass eine Ausgleichskurve durch die messtechnisch ermittelten Ist-Temperaturen gelegt wird. Hierbei kann es sich um eine Ausgleichsgerade oder um ein Polynom, z. B. ein Spline-Polynom oder um Wavelets handeln.

Zur Bestimmung einer Stellgröße können beispielsweise die unterschiedlichen Steigungen der Ist und Soll-Temperaturkurven herangezogen werden, das heißt es wird die Differenz zwischen der Kurvensteigungen gebildet. Diese Differenz stellt ein Maß für die Abweichung der Ist-Temperaturen von den Soll-Temperaturen dar.

Alternativ oder zusätzlich können die Integrale der Ist und Soll-Temperaturkurven gebildet werden. Die Differenz der beiden Integrale ergibt wiederum ein Maß für die Abweichung der Ist-Temperaturen von den Soll-Temperaturen.

Alternativ oder zusätzlich können auch die Wendepunkte der Ist- und Sollkurven für die Ermittlung einer Stellgröße verwendet werden. Typischerweise erhält man bei Weichblockschaum-Anlagetypen und bei Doppeltransportbandanlagen eine S-förmige Kurve. Deren Wendepunkt kann für die Ermittlung der Stellgröße verwendet werden.

Aufgrund der Abweichung der Ist- von den Soll-Oberflächentemperaturen wird also eine Stellgröße zur Nachregelung des Schaumprozesses ermittelt. Ist die gemessene Oberflächentemperatur größer als die Solltemperatur, so kann etwa die Geschwindigkeit des Transportbands 1 (vgl. Figur 1 und 2) erhöht werden, um die Ist-Oberflächentemperatur an den Messpositionen der Sensoren 9, 10, 11 und 12 entlang der Förderrichtung 2 zu reduzieren. Alternativ oder zusätzliche kann auch die pro Zeiteinheit von dem Mischkopf 3 aufgebrachte Menge des reaktiven chemischen Systems reduziert werden, um die Ist-Oberflächentemperaturen zu verringern. Alternativ oder zusätzlich kann ferner die Zusammensetzung des reaktiven chemischen Systems so geändert werden, dass es langsamer aufschäumt, um so die Ist-Oberflächentemperaturen an den Messpositionen zu verringern. Alternativ oder zusätzlich kann die Temperatur der Auftragsplatte so geändert werden, dass das reaktive Gemisch langsamer aufschäumt, um so die Ist-Oberflächentemperaturen an den Messpositionen zu verringern.

Alternativ oder zusätzlich kann bei einer Doppeltransportbandanlage die Temperatur der Deckschichten so geändert werden, dass das reaktive Gemisch langsamer aufschäumt, um so die Ist-Oberflächentemperaturen an den Messpositionen zu verringern. Vorzugsweise wird hierzu die Temperatur der Öfen geregelt, mit denen die vorzugsweise metallischen Deckschichten vorgeheizt werden.

Ferner kann die Temperatur des dem Mischkopf zugeführten Materials als Stellgröße verwendet werden. Vorzugsweise sind hierzu in den Zulaufleitungen zu dem Mischkopf Durchlauferhitzer/kühler vorgesehen, um die Temperatur der dem Mischkopf zugeführten Komponenten zu regeln.

Als weitere Stellgröße kann die Drehzahl eines Mischers, der zur Rührwerksvermischung der Komponenten dient, verwendet werden. Ein solcher Mischer oder Rührer ist zum Beispiel in dem Mischkopf angeordnet. Ein typischer Drehzahlbereich des Mischers ist 2000 bis 5000 Umdrehungen pro Minute.

Als weitere Stellgröße kann der Komponentendruck, der zur Hochdruckvermischung der Komponenten dient, verwendet werden. Zur Hochdruckvermischung werden das Polyolgemisch und die Isocyanatkomponente typischer auf einen Druck zwischen 120 und 200 bar komprimiert.

Die Regelung des Schaumprozesses erfolgt über den Regler 14. Der Regler 14 beinhaltet ein Modul zur Bestimmung der Ist-Steigkurve. Ferner beinhaltet der Regler 14 ein Modul für den Vergleich der ermittelten Ist-Temperaturkurve mit einer gespeicherten Soll-Temperaturkurve. Es wird eine Maßzahl errechnet, die ein Maß für die Abweichung der Ist- von der Soll- Temperaturkurve angibt. Diese Maßzahl dient zur Ermittlung einer Stellgröße für die Nachregelung des Prozess.

Die Anlage weist ferner ein Computersystem mit einem Modul zur Prognose des weiteren Aufschäumverhaltens" zur Prognose zumindest einer Produkteigenschaft des hergestellten Schaumstoffs, einer Tabelle zur Klassifizierung der prognostizierten Güte des hergestellten Schaumstoffs sowie einer Datenbank auf. In der Datenbank kann die Güte der prognostizierten Produktqualität in Längsrichtung des Blockschaums gespeichert werden, das heißt für eine bestimmte Stelle des Blockschaums in X-Richtung wird die prognostizierte Produktqualität in der Datenbank abgespeichert.

Das Computersystem erhält als Eingangsgröße die Ist-Temperaturkurve. Alternativ werden nur die gemessenen Ist-Oberflächentemperaturen eingegeben. Ferner kann auch die ermittelte Maßzahl, welche das Maß der Abweichung zwischen der Ist- und der Soll-Temperaturkurve angibt, in das Computersystem eingegeben werden.

Aufgrund dieser Eingabewerte werden das weitere Aufschäumverhalten und/oder eine oder mehrere Produkteigenschaften des aktuell hergestellten Schaumstoffs prognostiziert. Bei den prognostizierten Produkteigenschaften kann es sich zum Beispiel um die Dichte, die Stauchhärte oder die Festigkeit handeln.

Mittels der prognostizierten Produkteigenschaften erfolgt dann eine Klassifizierung der Güte durch einen Zugriff auf eine Tabelle, in der zulässige Toleranzwerte für die Produkteigenschaften je nach Produktgüte gespeichert sind. Die prognostizierten Produkteigenschaften und die ihnen zugeordnete Güte werden dann in der Datenbank für den aktuell hergestellten Schaumstoff abgelegt.

Üblicherweise wird der aus dem kontinuierlichen Schaumprozess resultierende Schaum in Blöcke von zum Beispiel 6 m Länge unterteilt. Hierzu weist die Anlage eine Schneidvorrichtung auf. Vorzugsweise wird diese Schneidvorrichtung von dem Computersystem angesteuert. Wenn das Computersystem einen kürzeren Abschnitt des Blockschaums mit einer geringeren Güte prognostiziert, so wird dieser durch Ansteuerung der Schneidvorrichtung aus dem Blockschaum herausgeschnitten. Auf diese Art und Weise lässt sich der Ausschuss des Schaumprozesses reduzieren.

Eine Ausführungsform des Prognosemoduls ist ein neuronales Netz. Die Eingangsgrößen des neuronalen Netzes sind die Ist-Oberflächentemperaturen, die Zusammensetzung des reaktiven chemischen Systems, welches durch den Mischkopf 3 auf das Transportband 1 aufgebracht wird (vgl. Figur 1 oder 2) sowie Anlagenparameter, wie zum Beispiel Drücke und Temperaturen und vorzugsweise auch Umweltparameter, wie zum Beispiel der Atmosphärendruck und die Luftfeuchtigkeit. Aus diesen Eingangsgrößen prognostiziert das neuronale Netz eine oder mehrere Produkteigenschaften sowie das weitere Aufschäumverhalten (z.B. die Überwälzung). Die zum Training des neuronalen Netzes erforderlichen Trainingsdaten können durch separate Versuchsreihen oder durch Aufnahme von Daten einer aktuellen Produktion gewonnen werden.

### Bezugszeichenliste

| | |
|---|---|
| Transportband | 1 |
| Förderrichtung | 2 |
| Mischkopf | 3 |
| Auftragsplatte | 4 |
| Expandierender Schaum | 5 |
| Abdeckpapier | 6 |
| Metallische Deckschicht | 7 |
| Rollen | 8 |
| Sensor | 9 |
| Sensor | 10 |
| Sensor | 11 |
| Sensor | 12 |
| Bussystem | 13 |
| Regler | 14 |

## Patentansprüche

1. Verfahren zur Herstellung von Schaumstoff in einem kontinuierlichem Schaumprozess mit folgenden Schritten:
- Erfassung von Ist-Oberflächentemperaturen des Schaumstoffs oder der Deckschichten entlang einer Förderrichtung,
- Bestimmung einer Stellgröße für den Schaumprozess in Abhängigkeit von einer Abweichung der Ist-Oberflächentemperaturen von Soll-Oberflächentemperaturen.

2. Verfahren nach Anspruch 1, wobei es sich bei dem Schaumstoff um Polyurethan-Schaumstoff handelt.

3. Verfahren nach Anspruch 1 oder 2, wobei es sich bei dem kontinuierlichen Schaumprozess um ein Verfahren vom Typ Hennecke (UBT, QFM), Planiblock, Draka-Petzetakis, Maxfoam, Vertifoam ,VPF oder MegaFoam handelt.

4. Verfahren nach einem der Ansprüche 1 bis 3, wobei die Ist-Oberflächentemperaturen durch entlang der Förderrichtung angeordnete Temperatursensoren erfasst werden.

5. Verfahren nach einem der Ansprüche 1 bis 4, wobei die Fördergeschwindigkeit als Stellgröße dient.

6. Verfahren nach einem der Ansprüche 1 bis 5, wobei die pro Zeiteinheit dem Schaumprozess zugeführte Materialmenge als Stellgröße dient.

7. Verfahren nach einem der Ansprüche 1 bis 6, wobei die chemische Zusammensetzung des dem Schaumprozess zugeführten Materials als Stellgröße dient.

8. Verfahren nach einem der Ansprüche 1 bis 7, wobei die Temperatur des dem Schaumprozess zugeführten Materials als Stellgröße dient.

9. Verfahren nach einem der Ansprüche 1 bis 8, wobei die Temperatur der Auftragsplatte als Stellgröße dient.

10. Verfahren nach einem der Ansprüche 1 bis 9, wobei die Temperatur der dem Schaumprozess zugeführten Deckschichten als Stellgröße dient.

11. Verfahren nach einem der Ansprüche 1 bis 10, wobei der Druck der Reaktionskomponenten bei einer Hochdruckvermischung als Stellgröße dient.

12. Verfahren nach einem der Ansprüche 1 bis 10, wobei die Drehzahl eines Mischers bei einer Rührwerksvermischung der Ausgangskomponenten des Schaumstoffs als Stellgröße dient.

13. Verfahren nach einem der Ansprüche 1 bis 12, wobei zumindest eine Produkteigenschaft des Schaumstoffs, der sich in einem bestimmten Bereich entlang der Förderrichtung befindet, in Abhängigkeit von den Ist-Oberflächentemperaturen prognostiziert wird.

14. Verfahren nach einem der Ansprüche 1 bis 12, wobei das Schäumverhalten in Abhängigkeit von den Ist-Oberflächentemperaturen prognostiziert wird.

15. Verfahren nach Anspruch 13 oder 14, wobei die Prognose mittels eines Regressionsmodells erfolgt.

16. Verfahren nach Anspruch 13 oder 14, wobei die Prognose mittels eines neuronalen Netzes oder eines hybriden neuronalen Netzes erfolgt.

17. Verfahren nach Anspruch 16, wobei dem neuronalen Netz zumindest die Ist-Oberflächentemperaturen als Eingangsparameter eingegeben werden.

18. Verfahren nach einem der Ansprüche 13, 15, 16 oder 17, wobei die zumindest eine Produkteigenschaft zur Klassifizierung der Qualität des Schaumstoffs verwendet wird.

19. Verfahren nach Anspruch 14, wobei Bereiche des Schaumstoffblocks, die eine geringe Qualität aufweisen, ausgeschnitten werden.

20. Anlage zur Herstellung von Schaumstoff in einem kontinuierlichem Schaumprozess mit
- Mitteln (9, 10, 11, 12) zur Erfassung von Ist-Oberflächentemperaturen des Schaumstoffs oder der Deckschichten entlang einer Förderrichtung,
- Mitteln (14) zur Bestimmung einer Stellgröße für den Blockschaumprozess in Abhängigkeit von einer Abweichung der Ist-Oberflächentemperaturen von vorgegebenen Soll-Oberflächentemperaturen.

21. Anlage nach Anspruch 20, wobei es sich bei dem Schaumprozess um ein Verfahren vom Typ Hennecke (UBT, QFM), Planiblock, Draka-Petzetakis, Maxfoam, Vertifoam, VPF oder MegaFoam handelt.

22. Anlage nach Anspruch 20 oder 21, wobei die Mittel zur Erfassung von Ist-Oberflächentemperaturen entlang der Förderrichtung angeordnete Temperatursensoren aufweisen.

23. Anlage nach einem der Ansprüche 20 bis 22, bei der die Mittel zur Bestimmung einer Stellgröße zur Bestimmung der Fördergeschwindigkeit ausgebildet sind.

24. Anlage nach einem der Ansprüche 20 bis 23, bei der die Mittel zur Bestimmung einer Stellgröße zur Bestimmung der pro Zeiteinheit zu dem Schaumprozess zuzuführenden Materialmenge ausgebildet sind.

25. Anlage nach einem der Ansprüche 20 bis 24, bei der die Mittel zur Bestimmung der Stellgröße zur Bestimmung der chemischen Zusammensetzung des dem Schaumprozess zuzuführenden Materials ausgebildet sind.

26. Anlage nach einem der Ansprüche 20 bis 25, bei der die Mittel zur Bestimmung der Stellgröße zur Bestimmung der Temperatur des dem Schaumprozess zugeführten Materials ausgebildet sind.

27. Anlage nach einem der Ansprüche 20 bis 26, bei der die Mittel zur Bestimmung der Stellgröße zur Bestimmung der Temperatur der Auftragsplatte (4) ausgebildet sind.

28. Anlage nach einem der Ansprüche 20 bis 27, bei der die Mittel zur Bestimmung der Stellgröße zur Bestimmung der Temperatur der dem Schaumprozess zugeführten Deckschichten (7) ausgebildet sind.

29. Anlage nach einem der Ansprüche 20 bis 28, bei der die Mittel zur Bestimmung der Stellgröße zur Bestimmung der Drehzahl eines Mischers für eine Rührwerksvermischung der Ausgangskomponenten des Schaumstoffs ausgebildet sind.

30. Anlage nach einem der Ansprüche 20 bis 29, bei der Mittel zur Bestimmung der Stellgröße zur Bestimmung des Drucks der Reaktionskomponenten bei einer Hochdruckvermischung ausgebildet sind.

31. Anlage nach einem der Ansprüche 20 bis 30 mit Mitteln zur Prognose von zumindest einer Produkteigenschaft von Schaumstoff, der sich an einer bestimmten Position entlang der Förderrichtung befindet, in Abhängigkeit von den Ist-Oberflächentemperaturen.

32. Anlage nach Anspruch 31 mit Mitteln zur Steuerung einer Schneidvorrichtung zur Zerteilung des Schaumstoffs in Blöcke, die eine prognostizierte Produkteigenschaft aufweisen.
